# EUROPEAN PATENT SPECIFICATION

(11) **EP 3 979 935 B1**
(45) Date of publication and mention of the grant of the patent: **21.05.2025**
(21) Application number: 20818545.4
(22) Date of filing: 04.06.2020
(51) Int. Cl.: A61B 17/80, A61B 17/88, A61C 3/00, A61C 7/10, A61C 7/18, A61C 8/00

(54) **ORTHODONTIC EXPANSION DEVICE**
KIEFERORTHOPÄDISCHE EXPANSIONSVORRICHTUNG
DISPOSITIF D'EXPANSION ORTHODONTIQUE

(30) Priority: 05.06.2019 US 201962857294 P
(43) Date of publication of application: 13.04.2022
(73) Proprietor: Achaemenid, LLC, Boston, MA 02210 (US)
(72) Inventor: RADMAND, Reza, Boston, MA 02210 (US); COLE, Stephen J, White Plains, NY 10603 (US)
(74) Representative: Sanger, Phillip Simon
(86) International application number: PCT/US2020/036033
(87) International publication number: WO 2020/247570

(56) References cited:
- DE-A1- 2 815 102
- DE-C- 211 137
- FR-A- 998 076
- US-A1- 2013 252 195
- US-A1- 2019 125 495
- US-B1- 6 402 510
- US-B1- 7 074 036
- US-B2- 7 094 051
- US-B2- 7 500 851

## Description

### FIELD OF THE DISCLOSURE

An orthodontic device, for example, a palatal expansion device, is generally described.

### BACKGROUND OF THE DISCLOSURE

Orthodontic devices for expanding a human patient's mandibular and maxillary palates or arches are known. These orthodontic devices, some of which are typically referred to as Herbst devices, aim to expand or enlarge the mandibular and/or maxillary arches and may be particularly useful for creating spaces in a person's mouth to accommodate, for example, the movement of teeth into desired positions. However, these devices are often difficult to adjust because they require the use of precision adjustment tools while having limited ability to access the adjustment feature of the device.

In view of the disadvantages associated with currently available orthodontic expansion devices, there is a need for an orthodontic expansion device that can be adjusted easily, and without the use of precision adjustment tools.

DE 211 137 C discloses a known jaw expansion device.

### BRIEF DESCRIPTION OF THE EXEMPLARY EMBODIMENTS

According to a first aspect of the invention there is provided an orthodontic expansion device according to claim 1. The exemplary embodiments include an orthodontic expansion device including a pair of opposed lateral portions or wings, each of which includes a molar band and a palate frame. The molar band is shaped to be placed on the molars of a patient, and the palate frame extends obliquely from the molar band, so that the palate frame lies against the patient's palate. The device further includes an adjustable tensioning assembly positioned between the pair of opposed lateral portions or wings that applies an outward pressure on the molars and palate of the patient. The tensioning assembly is at least partially detachable for adjusting the tension of the device, and therefore, the amount of pressure exerted on the molars and palate. As the palate expands, and the tension in the device relaxes, the tensioning assembly can easily be detached, retensioned, and reattached.

### BRIEF DESCRIPTION OF THE DRAWINGS

A more particular description will be rendered by reference to exemplary embodiments thereof that are illustrated in the appended drawings. Understanding that these drawings depict exemplary embodiments thereof, the exemplary embodiments will be described and explained with additional specificity and detail through the use of the accompanying drawings in which:
FIG. 1A is a schematic, perspective view of an orthodontic expansion device according to an embodiment;
FIG. 1B is a schematic, partial cross-sectional side view of the orthodontic expansion device of FIG. 1A;
FIG. 1C is a schematic, perspective view of an adjustment rod of the orthodontic expansion device of FIG. 1A, in isolation;
FIG. 1D is a schematic, perspective view of a first lateral wing of the orthodontic expansion device of FIG. 1A, in isolation;
FIG. 1E is a schematic, perspective view of a second lateral wing of the orthodontic expansion device of FIG. 1A, in isolation;
FIGS. 2A-2F schematically illustrate use of the orthodontic expansion device of FIG. 1A;
FIG. 3A is a schematic, perspective view of an orthodontic expansion device according to alternate embodiment;
FIG. 3B is a schematic, perspective view of a cylinder and a piston of the orthodontic expansion device of FIG. 3A, in isolation;
FIG. 3C is a partial, enlarged view of the orthodontic expansion device of FIG. 3A; and
FIG. 3D is a schematic, perspective view of an adjustment rod of the orthodontic expansion device of FIG. 3A, in isolation.

Various features, aspects, and advantages of the exemplary embodiments will become more apparent from the following detailed description, along with the accompanying figures in which like numerals represent like components throughout the figures and text. The various described features are not necessarily drawn to scale, but are drawn to emphasize specific features relevant to some embodiments.

The headings used herein are for organizational purposes only and are not meant to limit the scope of the disclosure or the claims. To facilitate understanding, reference numerals have been used, where possible, to designate like elements common to the figures.

### DETAILED DESCRIPTION

Reference will now be made in detail to various embodiments. Each example is provided by way of explanation and is not meant as a limitation and does not constitute a definition of all possible embodiments.

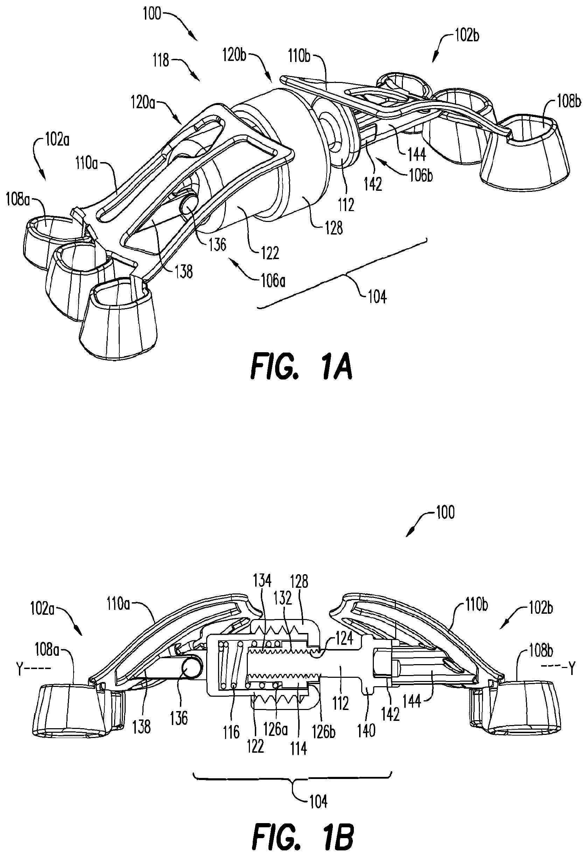

FIG. 1A schematically depicts an exemplary orthodontic expansion device 100, for example, a palate expander, according to the present disclosure. The orthodontic expansion device 100 includes a first lateral wing (or section or portion) 102a, a second lateral wing (or section or portion) 102b opposite the first lateral wing 102a, and a tensioning assembly 104 positioned between and connecting the first and second lateral wings 102a, 102b to one another. As will be discussed further below, the tensioning assembly 104 includes a first end 106a that may be pivotably attached to the first lateral wing 102a and a second end 106b that is detachably attached to the second lateral wing 102b for temporarily detaching and adjusting the tension within the tensioning assembly 104, and therefore, the pressure exerted by the orthodontic expansion device 100 on the molars and palate of the patient.

Still viewing FIG. 1A, the lateral wings 102a, 102b each include one or more respective molar bands 108a, 108b shaped to be placed or worn on (e.g., extend around and be secured in place by) a plurality of molar teeth (not shown), and a respective open, wire-like frame / palate frame 110a, 110b extending obliquely from the respective molar band 108a, 108b. While the word "molar" is used herein, it would be understood by one of ordinary skill in the art that the bands could attach to other teeth as well, including premolars. Further, while three (3) bands are depicted, it is also possible to provide the orthodontic expansion device 100 with less than or more than three bands. It is also possible that not every band will be filled by a tooth, as may be the case when, for instance, one or more teeth are missing. Each palate frame 110a, 110b is shaped (e.g., curved / contoured) to generally lie closely adjacent to, and preferably conform closely to the contours of, the shape of the patient's palate. It will be appreciated that, in this example, the palate frames 110a, 110b are shown as extending obliquely upwardly and inwardly towards one another for treatment of the upper palate. However, it is also contemplated that the orthodontic expansion device 100 can be inverted, and the frames 110a, 110b can extend obliquely downwardly and inwardly for treatment of the lower palate. In this example, each molar band 108a, 108b is shaped to extend around three teeth.

As shown in FIG. 1B, the tensioning assembly 104 of the orthodontic expansion device 100 generally includes an adjustment rod 112, a piston 114, and a spring 116 in cooperative engagement with one another. The piston 114, spring 116, and a portion of the adjustment rod 112 are enclosed within a housing 118. The housing 118 has a first, closed end 120a (FIG. 1A) proximate the first lateral wing 102a and a second, open end 120b (FIG. 1A) opposite the first end. The adjustment rod 112, piston 114, and spring 116 each generally lie along a common central longitudinal axis Y within the housing 118, such that their individual longitudinal centerlines are coaxial and colinear with one another. As will be explained further below, the adjustment rod 112, piston 114, and the spring 116 engage one another to maintain the first lateral wing 102a and the second lateral wing 102b in an outwardly tensioned relationship away from each other. The outward tension places pressure on the molars and palate to cause the palate to expand. After the palate expands, and the tension in the spring releases, the tensioning assembly 104 can be adjusted to re-tension/ further expand the orthodontic expansion device 100.

Still viewing FIG. 1B, the spring 116 is seated within a cylinder 122 having a first, closed end (e.g., along the closed end 120a of the housing 118) proximate and attached to the first lateral wing 102a, and a second, open end opposite the closed end (e.g., along the open end 120b of the housing 118). The spring 116 includes a first end disposed along the first, closed end of the cylinder 122, and a second end opposite the first end of the spring 116. The piston 114 is also seated in the cylinder 122. The piston 114 is generally cylindrical in shape with a central / interior bore 124 extending along its length. The piston 114 includes a first shoulder 126a for engaging the second end of the spring 116, as will be described below. An interiorly threaded cylinder cap 128 engages threads along an exterior surface of the second, open end of the cylinder 122 to retain the spring 116 and a second shoulder 126b of the piston 114 within the cylinder 122. The cylinder 122 and cylinder cap 128 collectively form the housing 118.

The closed end 120a of housing 118 (and more particularly cylinder 122), which at least partially forms and/or defines the first end 106a of the tensioning assembly 104, is pivotably joined to the first lateral wing 102a, as will be descibed in greater detail below.

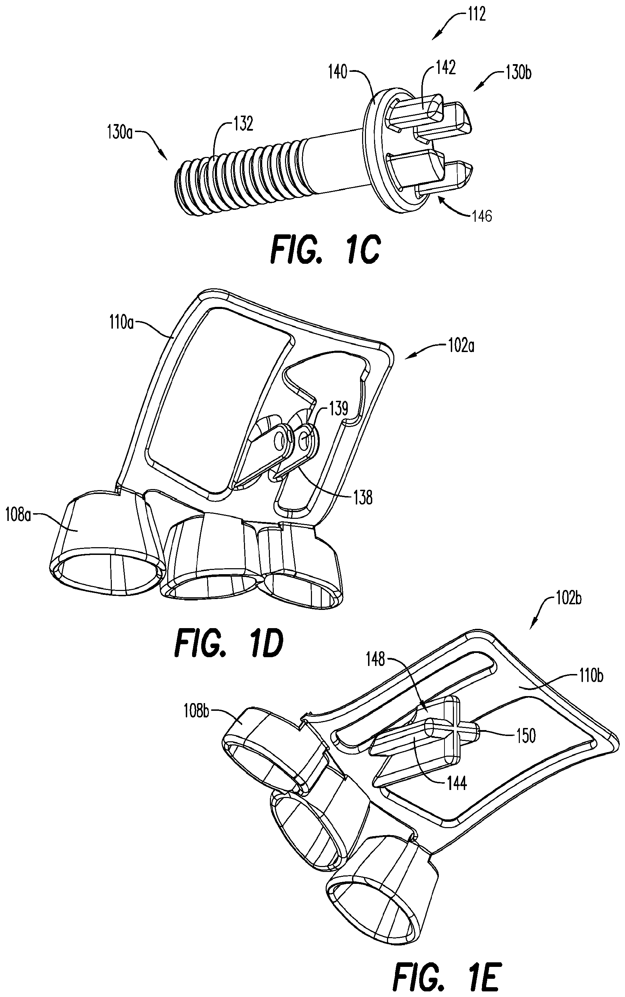

Still viewing FIG. 1B, and also viewing FIG. 1A and FIG. 1C (which schematically illustrates the adjustment rod 112 in isolation), the adjustment rod 112 has a first end 130a and a second end 130b opposite one another. The first end 130a of the adjustment rod 112 includes threads 132 that engage corresponding threads 134 positioned along the central / interior bore 124 of the piston 114, such that the first end 130a of the adjustment rod 112 extends into the bore 124 of the piston 114, as shown in FIG. 1B. The portion of the adjustment rod 112 that extends into the bore 124 (e.g., the first end 130a of the adjustment rod 112a) lies within the tensioning assembly housing 118. The second end 130b of the adjustment rod, which at least partially forms and/or defines the second end 106b of the tensioning assembly 104, is detachably connected to the second lateral wing 102b, as will be explained below.

As the adjustment rod 112 is threaded into the bore 124 of the piston 114, the piston 114 may move towards the closed end 120a of the housing 118. In doing so, the shoulder 126a of the piston 114 engages the spring 116 (e.g., the second end of the spring), compressing it towards the closed end 120a of the housing 118. When adjustment of the rod 112 is complete, and the orthodontic expansion device 100 is in use (as will be described below), the at least partially compressed spring 116 exerts a pressure on the piston 114, which in turn exerts a pressure on the adjustment rod 112 threaded into the bore 124 of the piston 114, which in turn maintains the first and second lateral wings 102a, 102b of the orthodontic expansion device 100 in an opposed, outwardly urged tension away from one another. Described in another way, the wings 102a, 102b are pushed apart by a degree dictated by the tension of the spring 116 and the position of the rod 112 within the piston 114. As a result, a pressure is exerted outwardly and upwardly (or downwardly) on the respective molar bands 108a, 108b and frames 110a, 110b to expand the palate of the patient / wearer. The amount of pressure applied on the palate and teeth may vary depending on the selection of the spring 116 used in the tensioning assembly 104. The amount of pressure applied to the palate and teeth may be up to about 5000 grams (g). The pressure range may generally range from about 450 g to about 5000 g. This may be achieved using springs of different spring rates to cover smaller incremental ranges. As the palate expands, the piston 114 moves back towards the open end 120b of the housing 118 and the tension in the spring 116 decreases, the orthodontic expansion device 100 can be adjusted to increase the tension again if needed, as will be described below.

As stated previously, the first end 106a of the tensioning assembly 104 is pivotably attached to the first lateral wing 102a and the second end 106b of the tensioning assembly 104 is removably attached to the second lateral wing 102b. This allows the tensioning assembly 104 to be partially detached and adjusted as needed to maintain the desired level of tension for palate expansion.

Specifically, viewing FIGS. 1A and 1B, the first end 106a of the tensioning assembly 104 (more particularly, housing 118, and even more particularly, cylinder 122) is pivotably connected by a hinge pin 136 to a hinge arm 138 extending from the frame 110a of the first lateral wing 102a. The hinge arm 138, seen for instance in FIG. 1D, may include an opening 139 to receive the hinge pin 136. The pivotable connection allows the tensioning assembly 104 to pivot or move away from the first lateral wing 102a to adjust the tension of the piston 114 against the spring 116.

Returning to FIG. 1C, the second end 130b of the adjustment rod 112 includes a flattened area or flange 140 including a plurality of outwardly extending projections (e.g., teeth / clutch teeth) 142. As shown in FIG. 1B and 1E (which shows the second lateral wing 102b in isolation), the teeth 142 are configured for engaging a connector 144 that projects inwardly from the second lateral wing 102b towards the first lateral wing 102a. As shown herein, the connector 144 is configured with four bars 150 (having a cross-sectional cross-shaped configuration). Thus, the cross-shaped connector 144 is shaped and dimensioned to fit in the space(s) 146 between the teeth 142 along the second end 130b of the adjustment rod 112, with both the teeth 142 and connector 144 in any properly aligned rotational orientation (such that there are four possible proper rotational engagements at every 90 degree rotation). Likewise, the teeth 142 of the adjustment rod 112 are shaped and dimensioned to fit in the spaces 148 around / adjacent to the bars 150 of the cross-shaped connector 144, with both the teeth 142 and connector 144 in any properly aligned rotational orientation (such that there are four possible proper rotational engagements at every 90 degree rotation). In this example, the adjustment rod 112 includes four teeth, each of which has a somewhat triangular shape when viewed as a projection. However, other possibilities are contemplated.

The second end 106b (FIG. 1A) of the tensioning assembly 104 may be repeatedly detached and re-attached and the adjustment rod 112 may be repeatedly adjusted as needed to maintain the desired level of tension between the first and second lateral wings 102a, 102b.

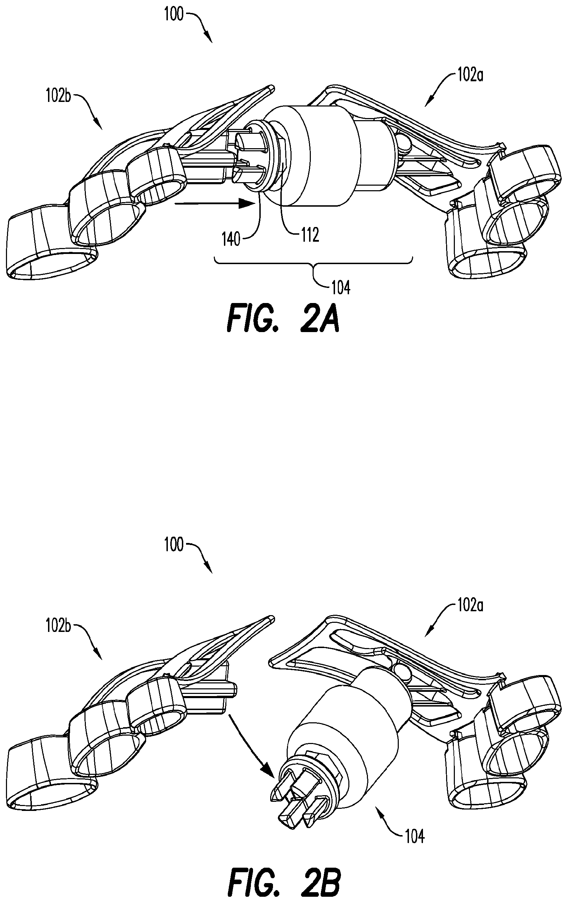

Adjustment of the orthodontic expansion device 100 may be illustrated generally in connection with FIGS. 2A-2F, which are only partially labeled.

First, to detach the tensioning assembly 104 from the second lateral wing 102b, the adjustment rod 112 may be pressed towards the first lateral wing 102a to compress the spring within the tensioning assembly housing, as indicated by the arrow in FIG. 2A. If desired, flange 140 may be used as a solid surface to push against with an instrument such as a dental pick to compress the spring.

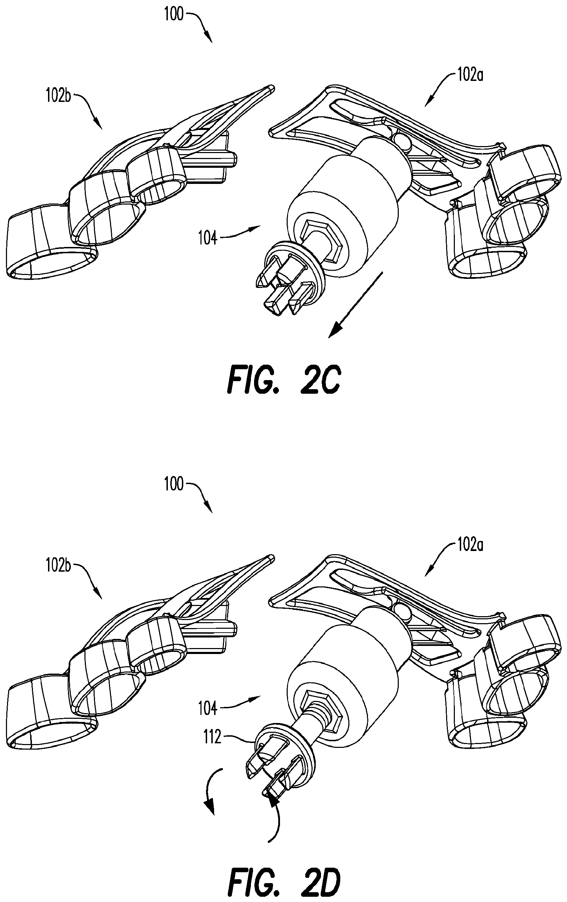

The tensioning assembly 104 may then be rotated to a convenient position away from the first lateral wing 102a (e.g., towards the opening of the patient's mouth, or, for instance, towards the tongue when the orthodontic expansion device 100 is positioned in the maxilla of the patient), as shown in FIG. 2B. When the tensioning assembly 104 is released, the spring will expand to its fully extended position (limited by the position of the threaded adjustment rod 112 and/or the piston and the cylinder cap), as shown in FIG. 2C.

As shown in FIG. 2D, the tension of the device 100 may be adjusted by rotating the adjustment rod 112 the desired number of turns, for example, in one-quarter turn increments. In one embodiment, rotating the adjustment rod 112 to the right (in a counter-clockwise direction) backs the adjustment rod 112 out of the piston, and increases the tension between the first and second lateral wings 102a, 102b when the tensioning assembly 104 is positioned between the first and second lateral wings 102a and 102b. Conversely, rotating the adjustment rod to the left (in a clock-wise direction) moves the adjustment rod away from the piston, and decreases the tension between the first and second lateral wings 102a, 102b. In some embodiments, one complete turn may advance the adjustment rod a length of about 0.45 millimeters (mm). Every one-quarter turn may thus adjust the length by about 0.1125mm. If desired, the four locking teeth may each have a different color (not shown) to give a visual indication of the rotational advancement of the adjustment rod.

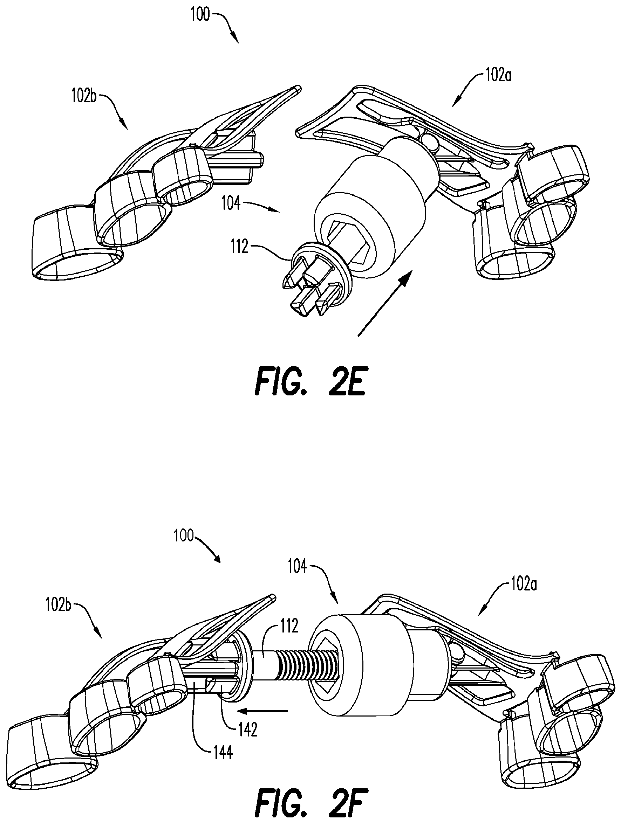

When the desired length is reached, the adjustment rod 112 can be reattached to the second lateral wing 102b by urging the tensioning assembly 104 back toward the first lateral wing 102a to compress the spring within the housing (FIG. 2E). The teeth 142 may then be aligned with the cross-shaped connector 144 in any one of the four connection positions (i.e., every 90° or 4 times per revolution), and releasing the tensioning assembly 104, as shown in FIG. 2F.

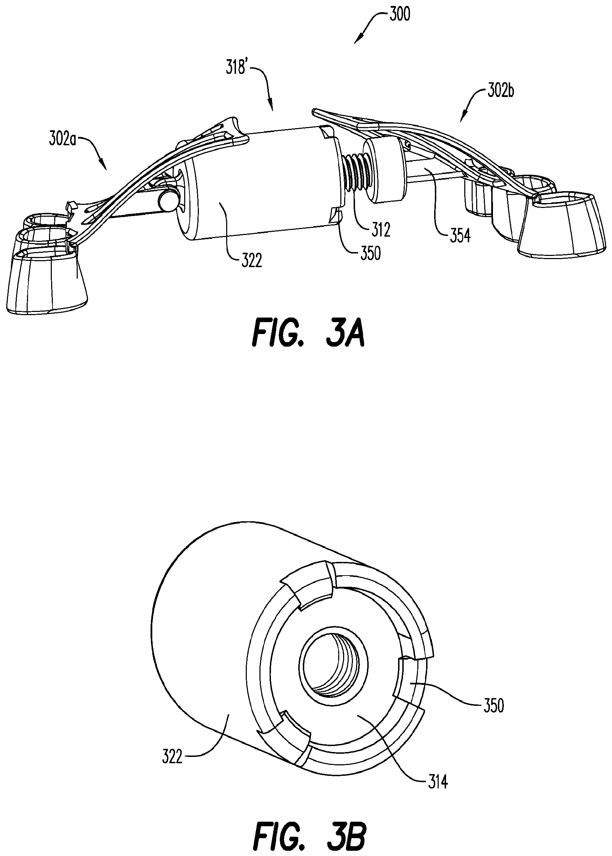

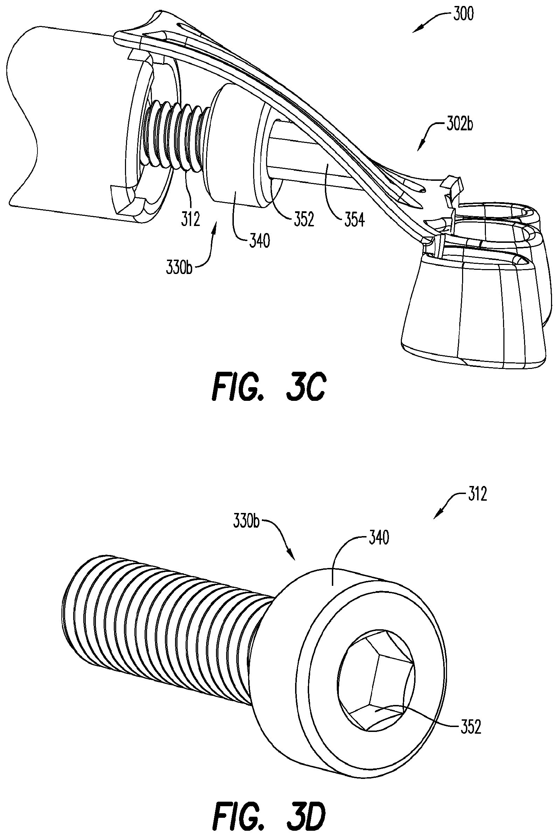

FIG. 3A is schematic, perspective view of an alternate embodiment of an orthodontic expansion device 300. As will be understood by those of ordinary skill in the art, the orthodontic expansion device 300 includes several features similar to those of the orthodontic expansion device 100 illustrated in FIGS. 1A-1E and FIGS. 2A-2F, and described hereinabove, except as described below. For purposes of brevity, the description of similar features is not repeated here.

In this embodiment, the cylinder cap 128 of the device 100 of FIG. 1A is omitted, and instead, the orthodontic expansion device 300 is provided with a retention crimp 350 positioned along a periphery of the open end of the cylinder 322. According to an aspect, a plurality of retention crimps 350 may be provided. As best seen in FIG. 3B, which shows the cylinder 322 and piston 314 in isolation, the retention crimps 350 are bent inwardly towards the interior of the cylinder 322 to maintain the piston 314 and spring (not shown in FIG. 3B) within the cylinder 322. In the illustrated orthodontic expansion device 300, there are three retention crimps 350. However, other possibilities are contemplated. As is evident from FIG. 3A, elimination of the cylinder cap 128 (FIG. 1A) allows the housing 318' (now including only cylinder 322 and crimps 350) to have a more compact size / shape, which may provide more comfort to the patient.

Additionally, as shown in FIG. 3C, in this embodiment, the second end 330b of the adjustment rod 312 engages the second lateral wing 310b differently than the orthodontic expansion device 100 of FIG. 1A. Specifically, the flattened area or flange 340 of the adjustment rod 312 of the orthodontic expansion device 300 of FIG. 3A includes a recess 352 configured (e.g., shaped) to receive a corresponding shaped connector / projection 354 that extends inwardly from the second lateral wing 302b towards the first lateral wing 302a. In this example, both the recess 352 and projection / connector 354 have a generally hexagonal shape (e.g., with six sides / flattened surfaces), such that the adjustment rod 312 can be turned six times and fit in six different rotational positions (one for each side of the hexagon). However, it is contemplated that other shapes may be used for the recess 352 and projection 354 that may provide other numbers of rotational fit possibilities. As described above, each side of the hexagonal recess 352 and/or projection 354 may be provided with markings or other indicia (not shown) to assist with indicating the degree of rotation.

It will be appreciated by those of ordinary skill in the art that the ability to adjust the orthodontic expansion devices 100, 300 described herein provides significant advantages over conventional expansion devices, which typically require the use of small tools, such as wrenches, to make small adjustments inside the patient's mouth. This not only provides greater convenience to the dentist, but substantially improved comfort to the patient while adjustments are being made.

Additionally, it will be appreciated that the fundamental concepts presented herein can readily be adapted to similar or related concepts. For example, the present design can be readily adapted to devices used in conjunction with orthopedic surgery for bone expansion of either long bones of the limbs or the jaw bone during distraction osteogenesis, or the like. Accordingly, the present disclosure should not be interpreted as being limited solely to palate expansion devices, despite the emphasis thereon for exemplary purposes.

This disclosure, in various embodiments, configurations and aspects, includes components, methods, processes, systems, and/or apparatuses as depicted and described herein, including various embodiments, sub-combinations, and subsets thereof. This disclosure contemplates, in various embodiments, configurations and aspects, the actual or optional use or inclusion of, e.g., components or processes as may be well-known or understood in the art and consistent with this disclosure though not depicted and/or described herein.

The phrases "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

In this specification and the claims that follow, reference will be made to a number of terms that have the following meanings. The terms "a" (or "an") and "the" refer to one or more of that entity, thereby including plural referents unless the context clearly dictates otherwise. As such, the terms "a" (or "an"), "one or more" and "at least one" can be used interchangeably herein. Furthermore, references to "one embodiment", "some embodiments", "an embodiment" and the like are not intended to be interpreted as excluding the existence of additional embodiments that also incorporate the recited features. Approximating language, as used herein throughout the specification and claims, may be applied to modify any quantitative representation that could permissibly vary without resulting in a change in the basic function to which it is related. Accordingly, a value modified by a term such as "about" is not to be limited to the precise value specified. In some instances, the approximating language may correspond to the precision of an instrument for measuring the value. Terms such as "first," "second," "upper," "lower" etc. are used to identify one element from another, and unless otherwise specified are not meant to refer to a particular order or number of elements.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances an event or capacity can be expected, while in other circumstances the event or capacity cannot occur - this distinction is captured by the terms "may" and "may be."

As used in the claims, the word "comprises" and its grammatical variants logically also subtend and include phrases of varying and differing extent such as for example, but not limited thereto, "consisting essentially of" and "consisting of." Where necessary, ranges have been supplied, and those ranges are inclusive of all sub-ranges therebetween. It is to be expected that the appended claims should cover variations in the ranges except where this disclosure makes clear the use of a particular range in certain embodiments.

The terms "determine", "calculate" and "compute," and variations thereof, as used herein, are used interchangeably and include any type of methodology, process, mathematical operation or technique.

This disclosure is presented for purposes of illustration and description. This disclosure is not limited to the form or forms disclosed herein. In the Detailed Description of this disclosure, for example, various features of some exemplary embodiments are grouped together to representatively describe those and other contemplated embodiments, configurations, and aspects, to the extent that including in this disclosure a description of every potential embodiment, variant, and combination of features is not feasible. Thus, the features of the disclosed embodiments, configurations, and aspects may be combined in alternate embodiments, configurations, and aspects not expressly discussed above. For example, the features recited in the following claims lie in less than all features of a single disclosed embodiment, configuration, or aspect. Thus, the following claims are hereby incorporated into this Detailed Description, with each claim standing on its own as a separate embodiment of this disclosure.

Advances in science and technology may provide variations that are not necessarily express in the terminology of this disclosure although the claims would not necessarily exclude these variations.

## Claims

1. An orthodontic expansion device (100, 300), comprising:
a first lateral wing (102a, 302a) and a second lateral wing (102b, 302b) opposite one another, wherein the first lateral wing and the second lateral wing each comprise
a molar band (108a, 108b) shaped to receive a molar of a patient, and
a palate frame (110a, 110b) extending obliquely from the molar band, the palate frame being shaped to lie against the patient's palate; and
a hinge arm (138) extending from the palate frame (110a) of the first lateral wing;
a tensioning assembly (104) disposed between the first and second lateral wings, wherein the tensioning assembly comprises:
a first end (106a) pivotably attached to the hinge arm of the first lateral wing; and
a second end (106b) detachably attached to the second lateral wing;
a piston (114, 314) disposed between the first end and the second end;
an adjustment rod (112, 312) comprising a first rod end including a thread that engages a corresponding thread extending along an interior bore of the piston, such that the adjustment rod is at least partially threaded into the interior bore of the piston; and
a spring (116),
wherein the adjustment rod retains the piston against the spring to maintain the first lateral wing and the second lateral wing in an outwardly tensioned relationship away from each other.

2. The orthodontic expansion device (100, 300), of claim 1, wherein the tensioning assembly (104) is detachably attached to the second lateral wing (102b, 302b), such that the tension of the orthodontic expansion device is adjustable.

3. The orthodontic expansion device (100, 300), of claim 1, wherein the adjustment rod (112, 312) is moveable towards the piston to compress the spring and increase tension between the first lateral wing and the second lateral wing.

4. The orthodontic expansion device (100, 300), of claim 1, wherein the piston (114, 314) comprises a shoulder configured for engagement with the spring.

5. The orthodontic expansion device (100, 300), of claim 1 wherein the adjustment rod (112, 312) further comprises:
a second rod end comprising a tooth (142) engaged with a cross-shaped connector (144) projecting inwardly from the second lateral wing.

6. The orthodontic expansion device (100, 300), of claim 5, further comprising four teeth (142) spaced apart from one another for receiving the cross-shaped connector (144) therebetween.

7. The orthodontic expansion device (100, 300), of claim 5, wherein the tooth is a plurality of teeth (142), and the tensioning assembly is configured to be detachably attached to the second lateral wing by disengagenment of the plurality of teeth from the cross-shaped connector.

8. The orthodontic expansion device (100, 300), of claim 7, wherein the adjustment rod is moveable towards the first lateral wing to compress the spring (116), such that the tooth can be disengaged from the cross-shaped connector.

9. The orthodontic expansion device (100, 300), of claim 1, wherein the piston, the spring, and a portion of the adjustment rod are enclosed within a housing, and the adjustment rod, the piston, and the spring are coaxially aligned with one another.

10. The orthodontic expansion device (100, 300), of claim 9, wherein the housing is pivotably connected to the first lateral wing.

11. The orthodontic expansion device (100, 300), of claim 1,
wherein the first end (106a) pivotably attached to the first lateral wing (102a, 302a) comprises a first, closed end of a cylinder and the second end (106b) detachably attached to the second lateral wing (102b, 302b) comprises a second, open end opposite the closed end ,
the spring is positioned within the cylinder, and
the piston is adjacent the spring.

12. The orthodontic expansion device (100, 300), of claim 11, wherein the spring includes:
a first end disposed along the first, closed end of the cylinder, and
a second end opposite the first end of the spring.

13. The orthodontic expansion device (100, 300), of claim 11, wherein the piston comprises:
a first shoulder for engaging the second end of the spring; and
a second shoulder positioned within the cylinder.

14. The orthodontic expansion device (100), of claim 13, further comprising:
an interiorly threaded cylinder cap having a plurality of internal threads,
wherein the internal threads engages external threads extending along an exterior surface of the second, open end of the cylinder to retain the spring and the second shoulder of the piston within the cylinder.

15. The orthodontic expansion device (300), of claim 11, wherein the cylinder further comprises:
a plurality of retention crimps along a periphery of the second, open end of the cylinder,
wherein the plurality of retention crimps are bent inwardly towards an interior of the cylinder to maintain the piston and the spring within the cylinder.

## Patentansprüche

1. Kieferorthopädische Erweiterungsvorrichtung (100, 300), umfassend:
einen ersten seitlichen Flügel (102a, 302a) und einen zweiten seitlichen Flügel (102b, 302b), die einander gegenüberliegen, wobei der erste seitliche Flügel und der zweite seitliche Flügel jeweils Folgendes umfassen:
ein Molarenband (108a, 108b), das so geformt ist, dass es einen Molaren eines Patienten aufnehmen kann, und
einen Gaumenrahmen (110a, 110b), der sich schräg vom Molarenband erstreckt, wobei der Gaumenrahmen so geformt ist, dass er gegen den Gaumen des Patienten anliegt; und
einen Scharnierarm (138), der sich vom Gaumenrahmen (110a) des ersten seitlichen Flügels erstreckt;
eine Spannvorrichtung (104), die zwischen dem ersten und zweiten seitlichen Flügel angeordnet ist, wobei die Spannvorrichtung Folgendes umfasst:
ein erstes Ende (106a), das schwenkbar am Scharnierarm des ersten seitlichen Flügels befestigt ist; und
ein zweites Ende (106b), das lösbar am zweiten seitlichen Flügel befestigt ist;
einen Kolben (114, 314), der zwischen dem ersten Ende und dem zweiten Ende angeordnet ist;
eine Einstellstange (112, 312), die ein erstes Stangenende umfasst, das ein Gewinde einschließt, das ein entsprechendes Gewinde in Eingriff nimmt, das sich entlang einer Innenbohrung des Kolbens erstreckt, sodass die Einstellstange mindestens teilweise in die Innenbohrung des Kolbens geschraubt ist; und
eine Feder (116),
wobei die Einstellstange den Kolben gegen die Feder zurückhält, um den ersten seitlichen Flügel und den zweiten seitlichen Flügel in einer nach außen gespannten Beziehung voneinander weg zu halten.

2. Kieferorthopädische Erweiterungsvorrichtung (100, 300) nach Anspruch 1, wobei die Spannvorrichtung (104) am zweiten seitlichen Flügel (102b, 302b) lösbar befestigt ist, sodass die Spannung der kieferorthopädischen Erweiterungsvorrichtung einstellbar ist.

3. Kieferorthopädische Erweiterungsvorrichtung (100, 300) nach Anspruch 1, wobei die Einstellstange (112, 312) in Richtung des Kolbens beweglich ist, um die Feder zu komprimieren und die Spannung zwischen dem ersten seitlichen Flügel und dem zweiten seitlichen Flügel zu erhöhen.

4. Kieferorthopädische Erweiterungsvorrichtung (100, 300) nach Anspruch 1, wobei der Kolben (114, 314) eine Schulter umfasst, die für den Eingriff mit der Feder konfiguriert ist.

5. Kieferorthopädische Erweiterungsvorrichtung (100, 300) nach Anspruch 1, wobei die Einstellstange (112, 312) ferner Folgendes umfasst:
ein zweites Stangenende, das einen Zahn (142) umfasst, der mit einem kreuzförmigen Verbinder (144) in Eingriff steht, der vom zweiten seitlichen Flügel nach innen vorsteht.

6. Kieferorthopädische Erweiterungsvorrichtung (100, 300) nach Anspruch 5, die ferner vier voneinander beabstandete Zähne (142) zum Aufnehmen des kreuzförmigen Verbinders (144) dazwischen umfasst.

7. Kieferorthopädische Erweiterungsvorrichtung (100, 300) nach Anspruch 5, wobei der Zahn eine Mehrzahl von Zähnen (142) ist und die Spannvorrichtung dazu konfiguriert ist, durch Außereingriffbringen der Mehrzahl von Zähnen aus dem kreuzförmigen Verbinder am zweiten seitlichen Flügel lösbar befestigt zu werden.

8. Kieferorthopädische Erweiterungsvorrichtung (100, 300) nach Anspruch 7, wobei die Einstellstange in Richtung des ersten seitlichen Flügels beweglich ist, um die Feder (116) zu komprimieren, sodass der Zahn aus dem kreuzförmigen Verbinder außer Eingriff gebracht werden kann.

9. Kieferorthopädische Erweiterungsvorrichtung (100, 300) nach Anspruch 1, wobei der Kolben, die Feder und ein Teil der Einstellstange in einem Gehäuse eingeschlossen sind, und die Einstellstange, der Kolben und die Feder koaxial zueinander ausgerichtet sind.

10. Kieferorthopädische Erweiterungsvorrichtung (100, 300) nach Anspruch 9, wobei das Gehäuse mit dem ersten seitlichen Flügel schwenkbar verbunden ist.

11. Kieferorthopädische Erweiterungsvorrichtung (100, 300) nach Anspruch 1,
wobei das erste Ende (106a), das am ersten seitlichen Flügel (102a, 302a) schwenkbar befestigt ist, ein erstes, geschlossenes Ende eines Zylinders umfasst und das zweite Ende (106b), das am zweiten seitlichen Flügel (102b, 302b) lösbar befestigt ist, ein zweites, offenes Ende gegenüber dem geschlossenen Ende umfasst,
die Feder innerhalb des Zylinders positioniert ist, und
sich der Kolben benachbart zur Feder befindet.

12. Kieferorthopädische Erweiterungsvorrichtung (100, 300) nach Anspruch 11, wobei die Feder Folgendes einschließt:
ein erstes Ende, das entlang des ersten, geschlossenen Endes des Zylinders angeordnet ist, und
ein zweites Ende gegenüber dem ersten Ende der Feder.

13. Kieferorthopädische Erweiterungsvorrichtung (100, 300) nach Anspruch 11, wobei der Kolben Folgendes umfasst:
eine erste Schulter zum Ineingriffnehmen des zweiten Endes der Feder; und
eine zweite Schulter, die innerhalb des Zylinders positioniert ist.

14. Kieferorthopädische Erweiterungsvorrichtung (100) nach Anspruch 13, ferner umfassend:
eine Zylinderkappe mit Innengewinde, die eine Mehrzahl von Innengewinden aufweist,
wobei das Innengewinde Außengewinde in Eingriff nimmt, die sich entlang einer Außenfläche des zweiten, offenen Endes des Zylinders erstrecken, um die Feder und die zweite Schulter des Kolbens innerhalb des Zylinders zu halten.

15. Kieferorthopädische Erweiterungsvorrichtung (300) nach Anspruch 11, wobei der Zylinder ferner Folgendes umfasst:
eine Mehrzahl von Rückhalte-Crimps entlang eines Umfangs des zweiten, offenen Endes des Zylinders,
wobei die Mehrzahl von Rückhalte-Crimps nach innen in Richtung eines Inneren des Zylinders gebogen sind, um den Kolben und die Feder innerhalb des Zylinders zu halten.

## Revendications

1. Dispositif d'expansion orthodontique (100, 300), comprenant :
une première aile latérale (102a, 302a) et une deuxième aile latérale (102b, 302b) opposées l'une à l'autre, dans lequel la première aile latérale et la deuxième aile latérale comprennent chacune
une bande molaire (108a, 108b) façonnée pour recevoir une molaire d'un patient, et
un cadre de palais (110a, 110b) s'étendant obliquement à partir de la bande molaire, le cadre de palais étant façonné pour reposer contre le palais du patient ; et
un bras d'articulation (138) s'étendant à partir du cadre de palais (110a) de la première aile latérale ;
un ensemble de tension (104) disposé entre les première et deuxième ailes latérales, dans lequel l'ensemble de tension comprend :
une première extrémité (106a) fixée de manière pivotante au bras d'articulation de la première aile latérale ; et
une deuxième extrémité (106b) fixée de manière détachable à la deuxième aile latérale ;
un piston (114, 314) disposé entre la première extrémité et la deuxième extrémité ;
une tige de réglage (112, 312) comprenant une première extrémité de tige incluant un filetage qui se met en prise avec un filetage correspondant s'étendant le long d'un alésage intérieur du piston, de telle sorte que la tige de réglage est au moins partiellement filetée dans l'alésage intérieur du piston ; et
un ressort (116),
dans lequel la tige de réglage retient le piston contre le ressort pour maintenir la première aile latérale et la deuxième aile latérale dans une relation de tension vers l'extérieur à l'écart l'une de l'autre.

2. Dispositif d'expansion orthodontique (100, 300) selon la revendication 1, dans lequel l'ensemble de tension (104) est fixé de manière détachable à la deuxième aile latérale (102b, 302b), de telle sorte que la tension du dispositif d'expansion orthodontique est réglable.

3. Dispositif d'expansion orthodontique (100, 300) selon la revendication 1, dans lequel la tige de réglage (112, 312) est mobile vers le piston pour comprimer le ressort et augmenter la tension entre la première aile latérale et la deuxième aile latérale.

4. Dispositif d'expansion orthodontique (100, 300) selon la revendication 1, dans lequel le piston (114, 314) comprend un épaulement configuré pour se mettre en prise avec le ressort.

5. Dispositif d'expansion orthodontique (100, 300) selon la revendication 1, dans lequel la tige de réglage (112, 312) comprend en outre :
une deuxième extrémité de tige comprenant une dent (142) en prise avec un connecteur en forme de croix (144) faisant saillie vers l'intérieur à partir de la deuxième aile latérale.

6. Dispositif d'expansion orthodontique (100, 300) selon la revendication 5, comprenant en outre quatre dents (142) espacées les unes des autres pour recevoir le connecteur en forme de croix (144) entre elles.

7. Dispositif d'expansion orthodontique (100, 300) selon la revendication 5, dans lequel la dent est une pluralité de dents (142), et l'ensemble de tension est configuré pour être fixé de manière détachable à la deuxième aile latérale par mise hors prise de la pluralité de dents du connecteur en forme de croix.

8. Dispositif d'expansion orthodontique (100, 300) selon la revendication 7, dans lequel la tige de réglage est mobile vers la première aile latérale pour comprimer le ressort (116), de telle sorte que la dent peut être mise hors prise du connecteur en forme de croix.

9. Dispositif d'expansion orthodontique (100, 300) selon la revendication 1, dans lequel le piston, le ressort et une partie de la tige de réglage sont enfermés dans un boîtier, et la tige de réglage, le piston et le ressort sont alignés coaxialement les uns avec les autres.

10. Dispositif d'expansion orthodontique (100, 300) selon la revendication 9, dans lequel le boîtier est relié de manière pivotante à la première aile latérale.

11. Dispositif d'expansion orthodontique (100, 300) selon la revendication 1,
dans lequel la première extrémité (106a) fixée de manière pivotante à la première aile latérale (102a, 302a) comprend une première extrémité fermée d'un cylindre et la deuxième extrémité (106b) fixée de manière détachable à la deuxième aile latérale (102b, 302b) comprend une deuxième extrémité ouverte opposée à l'extrémité fermée,
le ressort est positionné à l'intérieur du cylindre, et
le piston est adjacent au ressort.

12. Dispositif d'expansion orthodontique (100, 300) selon la revendication 11, dans lequel le ressort inclut :
une première extrémité disposée le long de la première extrémité fermée du cylindre, et
une deuxième extrémité opposée à la première extrémité du ressort.

13. Dispositif d'expansion orthodontique (100, 300) selon la revendication 11, dans lequel le piston comprend :
un premier épaulement destiné à se mettre en prise avec la deuxième extrémité du ressort ; et
un deuxième épaulement positionné à l'intérieur du cylindre.

14. Dispositif d'expansion orthodontique (100) selon la revendication 13, comprenant en outre :
un capuchon de cylindre fileté à l'intérieur ayant une pluralité de filetages internes,
dans lequel les filetages internes se mettent en prise avec les filetages externes s'étendant le long d'une surface extérieure de la deuxième extrémité ouverte du cylindre pour retenir le ressort et le deuxième épaulement du piston à l'intérieur du cylindre.

15. Dispositif d'expansion orthodontique (300) selon la revendication 11, dans lequel le cylindre comprend en outre :
une pluralité de sertissages de rétention le long d'une périphérie de la deuxième extrémité ouverte du cylindre,
dans lequel la pluralité de sertissages de rétention sont courbés vers l'intérieur vers un intérieur du cylindre pour maintenir le piston et le ressort à l'intérieur du cylindre.
